Europäisches Patentamt

(19) European Patent Office    (11) Numéro de publication: **0 165 888**

Office européen des brevets    **B1**

(12) FASCICULE DE BREVET EUROPEEN

(45) Date de publication du fascicule du brevet:    (51) Int. Cl.⁴: **A 21 C 3/02,** A 21 C 11/00
   **07.12.88**

(21) Numéro de dépôt: **85440034.8**

(22) Date de dépôt: **24.05.85**

(54) **Dispositif pour étirer positivement des pâtons pour la fabrication industrielle de pains longs.**

(30) Priorité: **29.05.84 FR 8408632**

(43) Date de publication de la demande:
   **27.12.85 Bulletin 85/52**

(45) Mention de la délivrance du brevet:
   **07.12.88 Bulletin 88/49**

(84) Etats contractants désignés:
   **AT BE CH DE GB IT LI LU NL SE**

(56) Documents cités:
   **DE-C- 509 246**
   **GB-A- 350 910**
   **US-A- 3 168 056**

(73) Titulaire: **Voegtlin, René, 2, rue de la Colline**
   **Oberhausbergen, F-67200 Strasbourg (FR)**

(72) Inventeur: **Voegtlin, René, 2, rue de la Colline**
   **Oberhausbergen, F-67200 Strasbourg (FR)**

(74) Mandataire: **Aubertin, François, Cabinet Lepage &**
   **Aubertin innovations et Prestations 4, rue de Haguenau,**
   **F-67000 Strasbourg (FR)**

### Description

L'invention concerne un dispositif d'étirage des pâtons pour étirer positivement sur une grande longueur des pâtons déjà préallongés, ce dispositif, s'insérant entre une façonneuse-allongeuse et un dispositif de dépose des pâtons dans l'enchaînement automatique des différentes phases de traitement d'une ligne de fabrication industrielle de pains longs, ledit dispositif d'étirage consistant en un ensemble tournant en forme de tambour entraîné par un arbre d'entraînement, ledit tambour coopérant à sa périphérie avec une coquille fixe délimitant entre le tambour et ladite coquille un espace annulaire partiel s'étendant à la demi-circonférence de l'ensemble tournant.

On connaît déjà par le document DE-C-509.246 un dispositif permettant d'étirer des boules de pâte. Ce dispositif comporte un ensemble tournant en forme de tambour entraîné par un arbre d'entraînement et coopérant avec une coquille fixe délimitant un espace annulaire s'étendant à la demi-circonférence de l'ensemble tournant.

Par ailleurs, on connaît des machines pouvant étirer des pâtons préallongés. Ainsi, on connaît déjà, par le document FRA-A-2.153.887, un dispositif pour le roulage et/ou le façonnage en long de pâtons selon lequel les pâtons éventuellement déjà allongés sont déplacés sur un plan inférieur de convoyage. Au-dessus de ce dernier sont disposés, avec un écartement se réduisant progressivement selon la direction de convoyage, deux plans de convoyage entraînés en sens contraire vers l'extérieur, à peu près transversalement à la direction de convoyage. Ces deux plans de convoyage sont formés par des courroies transporteuses sans fin alignés l'un par rapport à l'autre.

De même, on connaît, par le document FR-A-2.520.977, un dispositif de surallongement des pâtons initialement préfaçonnés comportant un support immobile lors de la phase de traitement et formé par un tapis sans fin et un caisson de traitement soumis à un nombre entier de mouvements de va-et-vient reposant sur la rangée des pâtons à traiter- La direction de ces mouvements de va-et-vient est perpendiculaire à l'axe longitudinal des pâtons, le caisson de traitement présentant au moins une surface horizontale parfaitement plane et garnie d'un tapis.

Cependant, quand ces dispositifs fonctionnent en roulant les pâtons entre des tapis, ils sont peu efficaces vis-à-vis de l'importance de la surlongueur conférée et si l'on accentue la pression entre les tapis, il se produit des glissements anarchiques. De ce fait, la surlongueur obtenue est variable d'un pain long à l'autre, ce qui est incompatible avec le but recherché.

En effet, il est souhaitable que les pains longs présentent une longueur uniforme, notamment si les pâtons surallongés sont destinés à la réalisation de petits pains avec la moindre perte de pâte possible. De plus, cette différence de longueur constitue un inconvénient important si les pains longs sont soumis à un emballage automatique.

Par ailleurs, d'autres dispositifs connus fonctionnant avec des pinces ou des prises entre galets conduisent à des traitements individuels des pâtons avec des mécanismes alternatifs compliqués et peu fiables lorsque les racleurs s'élèvent. Ainsi, on connaît, par le document FR-A-2.500.266, un dispositif comportant, entre la sortie d'une allongeuse conférant aux pâtons leur longueur définitive et un support destiné à l'introduction des pâtons longs dans la chambre de fermentation finale précédent leur cuisson, un ensemble anti-rétraction saisissant, en maintenant à leur longueur définitive, les pâtons longs, en provenance de l'allongeuse, et coopérant avec une stabilisatrice-cylindreuse assurant une détente à la texture des pâtons et l'annulation des contraintes mécaniques résiduelles des pâtons longs pour leur dépose automatique dans la chambre de fermentation finale. Cet ensemble antirétraction comporte une pluralité de leviers coudés pivotant chacun librement autour d'un axe commun. Chaque levier est pourvu d'une palette curviligne dont l'auge fait face à la sorti d el'allongeuse.

Finalement, on connaît également des machines à courroies ou à bandes divergentes. Si leur résultat est meilleur, elles sont cependant très encombrantes, de réalisation fort complexe et, en conséquence, d'un prix de revient élevé.

La présente invention a pour but de remédier à ces inconvénients. L'invention, telle qu'elle est caractérisée dans les revendications, résout le probleme consistant à créer un dispositif d'étirage des pâtons pour étirer positivement sur une grande longueur des pâtons déjà préallongés, ce dispositif, s'insérant entre une façonneuse-allongeuse et un dispositif de dépose des pâtons dans l'enchaînement automatique des différentes phases de traitement d'une ligne de fabrication industrielle de pains longs. Ledit dispositif d'étirage consiste en un ensemble tournant en forme de tambour entraîné par un arbre d'entraînement et dont ledit tambour, coopérant à sa périphérie avec une coquille fixe délimitant entre le tambour et ladite coquille un espace annulaire partiel s'étendant à la demi-circonférence de l'ensemble tournant, comporte un corps formé par deux séries de disques coaxiaux entraînés en rotation par l'arbre d'entraînement, chaque série de disques divergeant de part et d'autre du plan médian longitudinal du dispositif d'étirage, ledit plan médian longitudinal étant le plan médian perpendiculaire à l'axe d'entraînement de l'ensemble tournant, les deux séries de disques divergeants étant disposées de sorte qu'à l'entrée des pâtons préallongés dans l'espace annulaire, les disques de chacune des séries sont jointifs, alors qu'à la sortie des pâtons étirés de l'espace annulaire, les disques divergeants sont à leur écartement maximum.

De ce fait, chaque portion de longueur du pâton comprise entre deux disques subit un étirage positivement égal à l'espace libre entre deux disques sur la ligne où le pâton étiré quitte l'espace annulaire.

Les avantages obtenus grâce à cette invention consistent essentiellement en ce que l'on confère aux pâtons un supplément de longueur correspondant toujours très positivement et d'une manière répétitive à leur longueur initiale à l'aide d'un dispositif de conception très compacte et de grande simplicité. Il en résulte un dispositif de grande fiabilité et un faible prix de revient.

L'invention est exposée ci-après plus en détail à l'aide de dessins représentant seulement un mode d'exécution.

La figure 1 représente un vue en élévation, le dispositif d'étirage réalisé conformément à la présente invention et placé dans la ligne de fabrication de pains longs.

La figure 2 représente une vue selon la flèche $F_1$ de la figure 1 du dispositiv d'étirage.

La figure 3 représente en vue en plan, le dispositif d'étirage selon la ligne de coupe III–III de la figure 1.

La figure 4 représente en vue en élévation, un disque divergent monté sur l'arbre d'entraînement.

La figure 5 représente une vue en coupe, selon ligne de coupe V–V de la figure 4, du disque divergent.

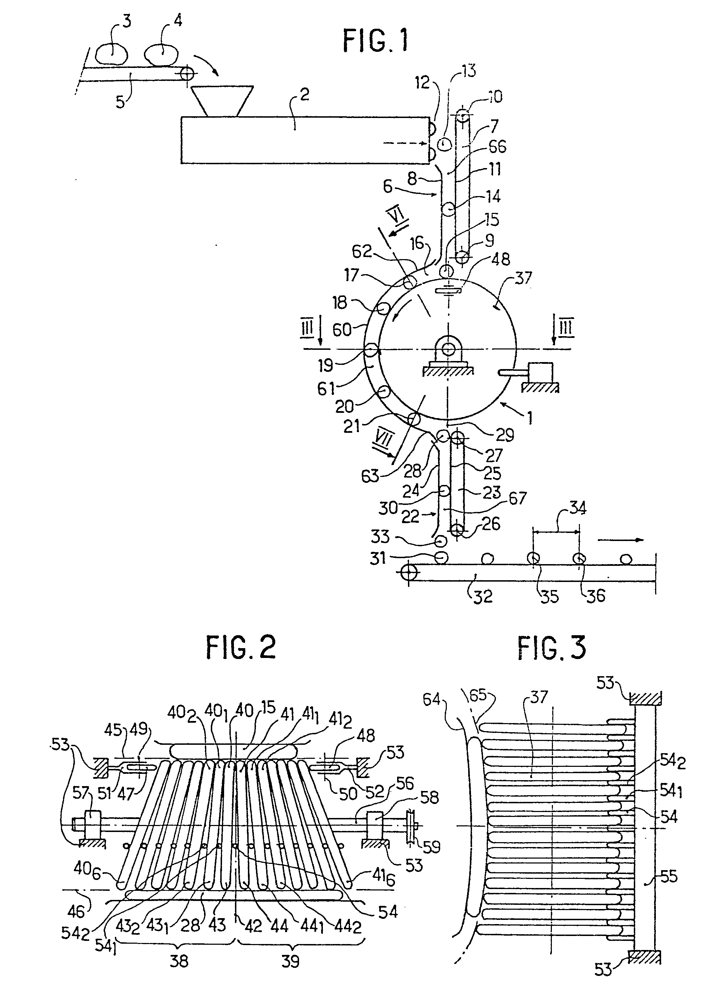

La figue 6 représente en vue partielle, selon la section VI de la figure 1, l'ensemble tournant pourvu d'un pâton se trouvant au début de la phase d'étirage.

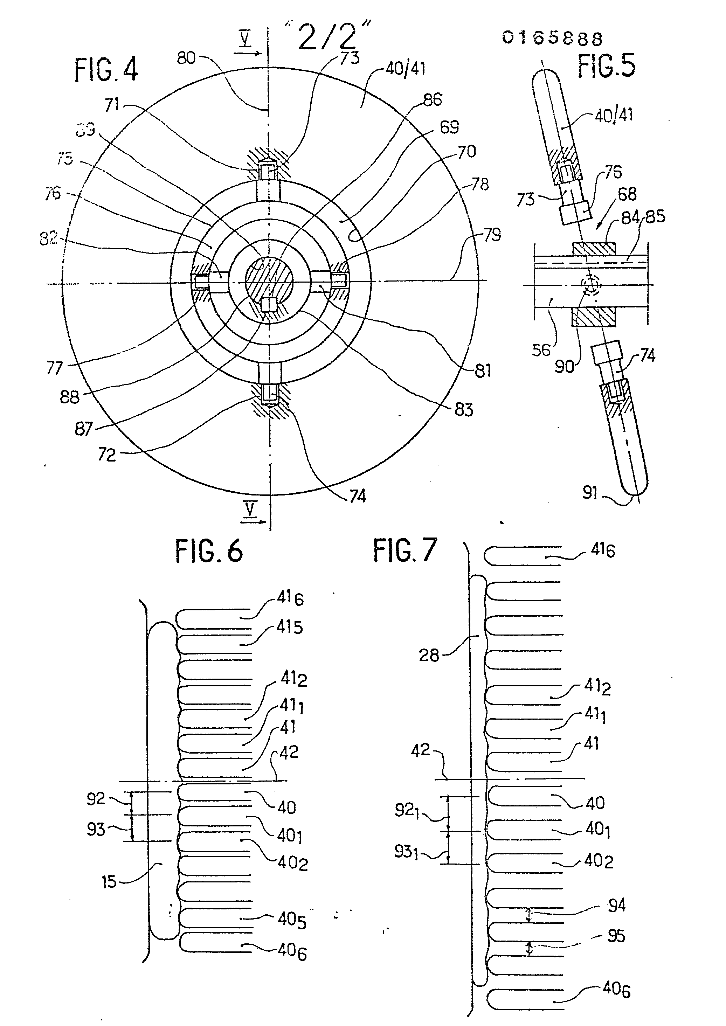

La figure 7 représente en vue partielle, selon la section VII de la figure 1, l'ensemble tournant pourvu d'un pâton se trouvant à la fin de la phase d'étirage.

On se réfère à la figure 1.

Le dispositif d'étirage 1, conforme à l'invention, est incorporé dans une ligne de fabrication industrielle de pains longs et plus particulièrement entre une façonneuse-allongeuse 2 et une chambre de fermentation finale (non représentée). La façonneuse-allongeuse 2 est alimentée en boules de pâte 3, 4 par l'intermédiaire d'un convoyeur 5 disposé entre ladite façonneuse-allongeuse 2 et une chambre de préfermentation.

En amont du dispositif d'étirage 1 est prévu un ensemble d'alimentation 6. Celui-ci est composé d'un convoyeur 7 et d'une paroi fixe 8. Le convoyeur 7 comporte un tambour moteur 9 et un tambour mené 10 autour desquels s'enroule un tapis sans fin 11. Celui-ci prend en charge, à la sortie 12 de la façonneuse-allongeuse 2, les pâtons préallongés 13, puis fait rouler les pâtons 14 le long e la paroi fixe 8 pour les présenter en 15 à l'entrée 16 du dispositif d'étirage 1. Les pâtons, suivant leurs positions successives 17, 18, 19, 20, 21, traversent le dispositif d'étirage 1.

En aval dudit dispositif d'étirage 1 est prévu un ensemble de dégagement 22 composé d'un convoyeur 23 et d'une paroi fixe 24. Le tapis sans fin 25 dudit convoyeur 23, s'enroulant autour d'un tambour moteur 26 et autour d'un tambour mené 27, prend en charge les pâtons étirés 28 à la sortie 29 du dispositif d'étirage 1, puis fait rouler ces pâtons 30 le long de la paroi fixe 24 pour les déposer en 31 sur un convoyeur 32 qui les achemine vers la chambre de fermentation finale. Lors de la dépose, ce convoyeur 32 est immobile. Une cellule photoélectrique 33 déclenche l'avance dudit convoyeur après chaue passage d'un pâton. Le pas de cette avance est réglé en fonction de la distance 34 entre deux pâtons successifs 35, 36 que l'on désire obtenir.

Le convoyeur 32 peut également transporter des plaques planes, des moules ou des plaques alvéolés destinés à recevoir les pâtons étirés en leur servant de support pour la fermentation finale, puis pour la cuisson.

On se réfère aux figures 1 à 3.

Conformément à l'invention, le dispositif d'étirage 1 comporte un ensemble tournant 37. Cet ensemble tournant 37 engendre un volume déterminant un tambour. Ledit ensemble tournant 37 est composé de deux séries 38, 39 de disques 40, $40_1$, $40_2$ ... et 41, $41_1$, $41_2$ ... Le nombre de disques 40, $40_1$, $40_2$ ... et 41, $41_1$, $41_2$ ... est quelconque. Cependant, on préconise un nombre voisin de la dizaine pour chacune des deux séries 38, 39. Les disques 40, $40_1$, $40_2$ ... et 41, $41_1$, $41_2$ ... divergent de part et d'autre du plan médian 42 du dispositif d'étirage 1 qui constitue également l'axe milieu du pâton préallongé 15 et du pâton étiré 28. A l'entrée 16 du dispositif d'étirage 1, les disques 40, $40_1$, $40_2$ ... et 41, $41_1$, $41_2$ ... sont jointifs alors qu'à la sortie 29 du dispositif d'étirage 1, ces disques sont écartés entre eux et s'écartent de plus en plus du plan médian 42. Les pourtours 43, $43_1$, $43_2$ ... et 44, $44_1$, $44_2$ ... de ces disques 40, $40_1$, $40_2$ ... et 41, $41_1$, $41_2$ ... sont situés dans un même plan horizontal supérieur 45 et dans un même plan horizontal inférieur 46. Ceci implique pour chaque disque 40, $40_1$, $40_2$ ..., 41, $41_1$, $41_2$ ... de chaque série 38, 39 allant du plan médian 42 à l'extrémité un diamètre différent qui va en croissant depuis le disque 40, 41 placé le plus près du plan médian 42 jusqu'au disque d'extrémité 40, 41 le plus éloigné dudit plan médian 2, les disques étant de plus en plus inclinés.

A l'entrée 16 du dispositif d'étirage 1, les disques 40, $40_1$, $40_2$ ... et 41, $41_1$, $41_2$ ... sont maintenus l'un contre l'autre, par l'appui de roulettes 47, 48 pivotant autour d'un axe vertical 49, 50 maintenu par des chapes 51, 52 solidaires d'un châssis quelconque 53 (pratiquement non représenté).

L'écartement, conditionnant la divergence entre les disques 40, $40_1$, $40_2$ ... et 41, $41_1$, $41_2$ ..., est assuré par des tétons 54, $54_1$, $54_2$ ... pénétrant chacun entre deux disques consécutifs 40, $40_1$–$40_1$, $40_2$ ..., 41, $41_1$–$41_1$, $41_2$ ... Les tétons 54, $54_1$, $54_2$ ... ont un diamètre identique et forment un peigne et sont solidaires d'une traverse 55 fixée au châssis 53.

L'ensemble tournant 37 est entraîné par un arbre d'entraînement 56 maintenu par des paliers 57, 58 solidaires du châssis 53 et actionné par un élément moteur soit directement accouplé à l'arbre d'entraînement, soit indirectement par l'intermédiaire d'une transmission quelconque 59. La fixation des disques 40, $40_1$, $40_2$ ... et 41, $41_1$, $41_2$ ... sur l'arbre d'entraînement 56 matérialise définitivement l'inclinaison de chaque disque.

Pour l'étirement des pâtons, l'ensemble tournant 37 coopère avec une coquille fixe 60 délimitant un espace annulaire partiel 61 s'étendant approximativement à la demi-circonférence de l'ensemble tournant 37 et nécessaire à l'opération d'étirage. La coquille fixe 60 comporte à l'entrée 16 et à la sortie 29 du dispositif d'étirage 1 une génératrice d'entrée 62 et une génératrice de sortie 63 sensiblement droites alors qu'à mi-hauteur entre ces deux génératrices 62, 63 correspondant au plan de coupe II–III de la figure 1, la coquille fixe 60 présente une génératrice courbe 64 sensiblement parallèle à la génératrice courbe 65 de l'ensemble tournant 37. L'espacement entre ce dernier et la coquille fixe 60 sera légèrement dégressif depuis le plan de section VI jusqu'au plan de section VII de la figure 1 pour tenir compte du fait que le pâton s'amincit au-fur-et-à-mesure qu'il s'étire.

Les pains que l'on désire produire étant de poids et de diamètre variables, on prévoit des moyens de réglage permettant de modifier l'espace 66 entre le tapis sans fin 11 et la paroi fixe 8 de l'ensemble d'alimentation 6, l'espace 67 entre le tapis sans fin 25 et la paroi fixe 24 de l'ensemble de dégagement 22 et les espacements en différents points entre l'ensemble tournant 37 et la coquille fixe 60. Ces moyens de réglage, non représentés, peuvent être quelconques et peuvent être, par exemple, des systèmes de biellettes. La coquille fixe 60 devant s'adapter à des courbures différentes suivant les écartements, il sera avantageux de la réaliser en un matériau déformable, par exemple une feuille d'acier mince garnie sur sa face intérieure utile d'un feutre.

On se réfère aux figues 4 et 5 représentant, à titre d'exemple non limitatif, un mode d'exécution des moyens d'entraînement des disques 40, $40_1$, $40_2$ ..., 41, $41_1$, $41_2$ ..., ces moyens pouvant être un entraînement articulé à la CARDAN 68. Chaque disque 40, 41 comporte un alésage 69. Dans la paroi 70, on réalise deux logements 71, 72 diamétralement opposés dans lesquels sont engagés des pivots 73, 74 faisant saillie par rapport au pourtour extérieur 75 d'une bague intermédiaire 76. On réalise dans cette bague intermédiaire 76 deux logements 77, 78 diamétralement opposés mais dont l'axe 79 est perpendiculaire à l'axe 80 des pivots 73, 74. Dans ces logements 77, 78 prennent place deux pivots 81, 82 faisant saillie par rapport au pourtour extérieur 83 d'un manchon 84. L'entraînement en rotation du manchon 84 par l'arbre d'entraînement 56 est assuré par une clavette 85 logée dans des rainures 86, 87 réalisées respectivement sur le pourtour extérieur 88 de l'arbre d'entraînement 56 et dans l'alésage 89 du manchon 84. Chaque manchon 84 est longitudinalement positionné et bloqué sur l'arbre d'entraînement 56 de sorte que son centre 90 constitue le point déterminant la divergence du disque correspondant. Pour éviter que les disques 40, 41 blessent la pâte lors de l'étirage dans le dispositif 1, on confère aux disques 40, 41 un bord arrondi 91.

Le procédé d'étirage s'opère comme suit:

Lorsque le pâton préallongé 15, amené par l'ensemble d'alimentation 6, tombe sur l'ensemble tournant 37, il est immédiatement poussé par les disques 40, 41 contre la paroi interne de la coquille fixe 60 qui entoure partiellement ledit ensemble tournant 37. La rotation des disques 40, 41 fait progresser le pâton dans l'espace annulaire 61, le pâton tournant sur lui-même du fait qu'il est appuyé contre la paroi intérieure de la coquille fixe 60.

On se réfère aux figures 6 et 7.

Près de l'entrée 16, au droit de la section VI (voir figure 1), chaque portion 92, 93 du pâton 15 prise entre deux disques consécutifs 40, $40_1$ ... représente un tronçon de longueur à étirer. A la fin du parcours d'étirage, au droit de la section VII (voir figure 1), les disques 40, $40_1$ ... tendant par leur divergence vers leur écartement maximum, chaque portion $92_1$, $93_1$ de pâton 28 prise entre deux disques consécutifs, aura été étirée et le diamètre du pâton aura diminué.

Entre leur entrée et leur sortie de l'espace annulaire 61, les pâtons préallongés auront subi positivement un étirage d'une longueur égale à la somme des écartements 94, 95 entre les disques divergents 40, $40_1$ ... qui auront pris en charge le pâton 15 à l'entrée 16 du dispositif d'étirage. Le nombre de disques agissant 40, $40_1$ est fonction de la longueur initiale du pâton préallongé 13, c'est-à-dire du réglage de la façonneuse-allongeuse 2.

Certaines façonneuses fournissent des pâtons plus gros au milieu. Si l'on veut obtenir à la sortie du dispositif d'étirage 1 des pâtons étirés de forme cylindrique, il est nécessaire de pourvoir l'ensemble tournant 37 de moyens pour obtenir des divergences supérieures entre les disques 40, $40_1$ ..., 41, $41_1$ ... situés à proximité du plan médian 42 par rapport aux divergences des disques $40_5$, $40_6$ ... $41_5$, $41_6$ ... situés le plus loin du plan médian 42.

A cet effet, il suffit de prévoir des tétons 54 d'un diamètre plus important à proximité du plan médian 42 qu'aux extrémités de la traverse 55 et de caler à des distances correspondantes les manchons 84 sur l'arbre d'entraînement 56.

Par ailleurs, en roulant les pâtons étirés 30 contre la paroi fixe 24, le tapis sans fin 25 de l'ensemble de dégagement 22 assure non seulement la fonction d'évacuateur mais également une fonction d'égalisation et de finition du pâton étiré 31 pour, le cas échéant, faire disparaître d'éventuelles empreintes circulaires provoquées en cours d'étirage par les bords arrondis 91 des disques 40, $40_1$ ...

## Revendications

1. Dispositif d'étirage (1) des pâtons pour étirer positivement sur une grande longueur des pâtons déjà préallongés (13), ce dispositif, s'insérant entre une façonneuse-allongeuse (2) et un dispositif de dépose (32) des pâtons dans l'enchaînement automatique des différentes phases de traitement d'une ligne de fabrication industrielle de pains longs, ledit dispositif d'étirage (1) consistant en un ensemble tournant (37) en forme de tambour entraîné par un arbre d'entraînement (56) ledit tambour coopérant à sa périphérie avec une coquille fixe (60) délimitant entre le tambour et ladite coquille (60) un espace annulaire partiel (61) s'étendant à la demi-circonférence de l'ensemble tournant (37), caractérisé en ce que le corps du tambour constituant l'ensemble tournant (37) est formé par deux séries (38, 39) de disques coaxiaux (40, $40_1$, $40_2$ ... 41, $41_1$, $41_2$ ...) entraînés en rotation par l'arbre d'entraînement (56), chaque série de disques divergeant de part et d'autre du plan médian longitudinal (42) du dispositif d'étirage (1), ledit plan médian longitudinal (42) étant le plan médian perpendiculaire à l'axe d'entraînement de l'ensemble tournant (37), les deux séries (38, 39) de disques divergeants (40, $40_1$, $40_2$ ..., 41, $41_1$, $41_2$ ...) étant disposées de sorte qu'à l'entrée (16) des pâtons préallongés (15) dans l'espace annulaire (61), les disques de chacune des séries (40,

$40_1$, $40_2$ ..., 41, $41_1$, $41_2$ ...) sont jointifs, alors qu'à la sortie (29) des pâtons étirés (28) de l'espace annulaire (61), les disques divergeants (40, $40_1$, $40_2$ ... 41, $41_1$, $41_2$ ...) sont à leur écartement maximum.

2. Dispositif selon la revendication 1, caractérisé en ce qu'il comporte à son entrée (16) des roulettes (47, 48) pivotant autour d'un axe (49, 50) perpendiculaire à l'arbre d'entraînement (56) de l'ensemble tournant (37), ces axes étant maintenus par des chapes (51, 52) solidaires d'un châssis quelconque (53), lesdites roulettes (47, 48) maintenant jointifs les différents disques (40, 41) les uns contre les autres à hauteur de ladite entrée (16).

3. Dispositif selon la revendication 1, caractérisé en ce qu'il comporte des tétons (54, $54_1$, $54_2$ ...l) pénétrant chacun entre deux disques consécutifs et conditionnant la divergence entre les disques (40, $40_1$, $40_2$ ..., 41, $41_1$, $41_2$ ...), ces tétons (54, $54_1$, $54_2$), solidaires d'une traverse (55) fixée au châssis (53), ayant un diamètre identique pour un étirage positivement égal de chaque portion (92, 93) de pâton prise entre deux disques consécutifs et un diamètre plus important à proximité du plan médian (42) qu'aux extrémités de la traverse (55) pour l'étirage de pâtons plus gros en leur milieu.

4. Dispositif selon la revendication 1, caractérisé en ce que l'arbre d'entraînement (56), maintenu par des paliers (57, 58) solidaires du châssis (53) et actionné par un élément moteur soit directement accouplé à l'arbre d'entraînement (56), soit indirectement par l'intermédiaire d'une transmission quelconque (59), comporte pour chaque disque (40, 41 ...) un entraînement articulé ü la CARDAN (68), chaque entraînement articulé à la CARDAN (68) présentant un manchon (84) claveté sur l'arbre d'entraînement (56) et pourvu de deux pivots saillants (81, 82) diamétralement opposés coopérant avec des logements (77, 78) d'une bague intermédiaire (76), comprenant deux pivots saillants (73, 74) diamétralement opposés mais dont l'axe (80) est perpendiculaire à l'axe (79) des logements (77, 78) présentant un alésage (69) dans lequel sont réalisés deux logements (71, 72) dans lesquels sont introduits les pivots (73, 74) de la bague intermédiaire (76) alors que chaque manchon (84) est un manchon longitudinalement positionné et bloqué sur l'arbre d'entraînement (56) de sorte que son centre (90) constitue le point déterminant la divergence du disque correspondant (40, 41).

5. Dispositif selon la revendication 1, caractérisé en ce qu'il comporte en amont de l'ensemble tournant (37) un ensemble d'alimentation (6) composé d'un convoyeur (7), formé d'un tambour moteur (9), d'un tambour mené (10) et d'un tapis sans fin (11), et d'une paroi fixe (8) contre laquelle le tapis sans fin (11) fait rouler les pâtons préallongés (13) provenant de la sortie (12) d'une façonneuse-allongeuse (2) et les présente à l'entrée (16), l'ensemble d'alimentation (6) comprenant entre le tapis sans fin (11) et la paroi fixe (8) un espace (66) variable en fonction du poids et du diamètre des pâtons préallongés (15).

6. Dispositif selon la revendication 1, caractérisé en ce qu'il comporte, en aval de l'ensemble tournant (37), un ensemble de dégagement (22) composé d'un convoyeur (23) et d'une paroi fixe (24) déposant les pâtons étirés (28) sur un convoyeur (32) les acheminant vers la chambre de fermentation finale, cet ensemble de dégagement (22) comprenant entre le tapis sans fin (25) et la paroi fixe (24) un espace (67) variable.

7. Dispositif selon la revendication 1, caractérisé en ce qu'il comporte un espace annulaire (61) réglable en fonction du poids et du diamètre des pâtons préallongés (15).

**Patentansprüche**

1. Streckvorrichtung (1) für Teigstücke zum positiven Strecken bereits vorgelängter Teigstücke (13) auf eine große Länge, wobei diese Vorrichtung zwischen einer Form-/Längvorrichtung (2) und einer Abstellvorrichtung (32) für Teigstücke in der automatischen Verkettung der verschiedenen Bearbeitungsphasen eines Fließbandes zur industriellen Herstellung von Langbroten eingefügt ist, wobei die vorerwähnte Streckvorrichtung (1) aus einer trommelförmigen, drehenden Einheit (37) besteht, die von einer Antriebswelle (56) angetrieben wird, wobei die vorerwähnte Trommel an ihrem Umfang mit einer feststehenden Schale (60) zusammenwirkt, die zwischen der Trommel und der vorerwähnten Schale (60) einen teilweise ringförmigen Raum (1) abgrenzt, der sich bis zum halben Kreisumfang der drehenden Einheit (37) erstreckt, dadurch gekennzeichnet, daß der Körper der Trommel, die die drehende Einheit (37) darstellt, von zwei Reihen (38, 39) koaxialer Scheiben (40, $40_1$, $40_2$ ..., 41, $41_1$, $41_2$ ...) gebildet wird, die drehend von der Antriebswelle (56) angetrieben werden, wobei jede Reihe von Scheiben beiderseits der mittleren Längsebene (42) der Streckvorrichtung (1) auseinanderläuft, und wobei es sich bei der vorerwähnten mittleren Längsebene (42) um die mittlere Ebene handelt, die senkrecht zur Antriebswelle der drehenden Einheit (37) gelegen ist, wobei die beiden Reihen (38, 39) auseinanderlaufender Scheiben (40, $40_1$, $40_2$ ..., 41, $41_1$, $41_2$ ...) so angeordnet sind, daß die Scheiben jeder der beiden Reihen (40, $40_1$, $40_2$ ..., 41, $41_1$, $41_2$ ...) am Eingang (16) der vorgelängten Teigstücke (15) im ringförmigen Raum (61) aneinander stoßen, während die auseinanderlaufenden Scheiben (40, $40_1$, $40_2$ ..., 41, $41_1$, $41_2$ ...) sich am Ausgang (29) der gestreckten Teigstücke (28) des ringförmigen Raums (61) in ihrem maximalen Abstand befinden.

2. Vorrichtung gemäß dem Anspruch 1, dadurch gekennzeichnet, daß sie am Eingang (16) Rollen (47, 48) umfaßt, die um eine Achse (49, 50) drehen, die senkrecht zur Antriebswelle (56) der drehenden Einheit (37) angeordnet ist, wobei diese Achsen von fest mit einem beliebigen Rahmen (53) verbundenen Bügeln (51, 52) gehalten werden und wobei die vorerwähnten Rollen (47, 48) die verschiedenen Scheiben (40, 41) auf der Höhe des vorerwähnten Eingangs (16) aneinanderstoßend hält.

3. Vorrichtung gemäß dem Anspruch 1, dadurch gekennzeichnet, daß sie Zapfen (54, $54_1$, $54_2$ ...) umfaßt, die jeweils zwischen zwei aufeinanderfolgende Scheiben eindringen und die Divergenz zwischen den Scheiben (40, $40_1$, $40_2$ ..., 41, $41_1$, $41_2$ ...) bedingen, wobei diese Zapfen (54, $54_1$, $54_2$ ...) fest mit ei-

nem Querstück (55) verbunden sind, das am Rahmen (53) befestigt ist und wobei sie einen gleichen Durchmesser für eine positiv gleiche Streckung jeder Portion (92, 93) eines Teigstücks aufzeigen, das zwischen zwei aufeinanderfolgenden Scheiben aufgenommen wird, und einen größeren Durchmesser in der Nähe der mittleren Ebene (42) als an den Enden des Querstücks (55), und zwar zum Strecken von Teigstücken, die in ihrer Mitte dicker sind.

4. Vorrichtung gemäß dem Anspruch 1, dadurch gekennzeichnet, daß die Antriebswelle (56), die durch fest mit dem Rahmen (53) verbundene Lager (57, 58) gehalten und von einem Antrieb betätigt wird, der entweder unmittelbar an die Antriebswelle (56) oder mittelbar durch eine beliebige Übertragung (59) angeschlossen ist, für jede Scheibe (40, 41 ...) einen gelenkig an der CARDAN (68) angebrachten Antrieb aufzeigt, wobei jeder gelenkig an der CARDAN (68) angebrachte Antrieb eine Buchse (84) aufzeigt, die an der Antriebswelle (56) festgekeilt ist und mit zwei herausragenden Drehzapfen (81, 82) versehen ist, die sich diametral gegenüber liegen und mit Lagerungen (77, 78) eines Zwischenrings (76) zusammenwirken, der zwei diametral gegenüberliegende herausragende Drehzapfen (73, 74) aufzeigt, deren Achse (80) jedoch senkrecht zur Achse (79) der Lagerungen gelegen ist, die eine Bohrung (69) aufzeigen, in der zwei Lagerungen (71, 72) angebracht sind, in die die Drehzapfen (73, 74) des Zwischenrings (76) eingebracht werden, während jede Buchse (84) eine längsweise angeordnete und an der Antriebswelle (56) so festgestellte Buchse ist, daß ihr Mittelpunkt (90) den Punkt bildet, der die Divergenz der entsprechenden Scheibe (40, 41) bestimmt.

5. Vorrichtung gemäß dem Anspruch 1, dadurch gekennzeichnet, daß sie oberhalb der drehenden Einheit (37) eine Zufuhreinheit (6) umfaßt, die aus einer Fördervorrichtung (7) besteht, die von einer Antriebstrommel (9), einer angetriebenen Trommel (10) und einem Endlosband (11) sowie von einer feststehenden Wand (8) gebildet wird, gegen die das Endlosband (11) die vorgelängten Teigstücke (13) rollen läßt, die vom Ausgang (12) einer Form-/ Längvorrichtung (2) kommen und am Eingang (16) angeboten werden, wobei die Zufuhreinheit (6) zwischen dem Endlosband (11) und der feststehenden Wand (8) einen Raum (66) aufzeigt, der in Abhängigkeit zum Gewicht und zum Durchmesser der vorgelängten Teigstücke (15) veränderlich ist.

6. Vorrichtung gemäß dem Anspruch 1, dadurch gekennzeichnet, daß sie unterhalb der drehenden Einheit (37) eine Abfuhreinheit (22) aufzeigt, die aus einer Fördervorrichtung (23) und einer feststehenden Wand (24) besteht und die gestreckten Teigstücke (28) auf eine Fördervorrichtung (32) abstellt, die sie zur Endgärungskammer verbringt, wobei diese Abfuhreinheit (22) zwischen dem Endlosband (25) und der feststehenden Wand (24) einen veränderlichen Raum (67) aufzeigt.

7. Vorrichtung gemäß dem Anspruch 1, dadurch gekennzeichnet, daß sie einen ringförmigen Raum (61) aufzeigt, der sich in Abhängigkeit zum Gewicht und zum Durchmesser der vorgelängten Teigstücke (15) einstellen läßt.

## Claims

1. A device (1) for stretching dough lumps, for positively stretching over a great length already pre-stretched dough lumps (13), said device being fitted between a former-stretcher (2) and a dough take-up device 32 in the automatic sequence of the different treatment phases of an industrial production line of long loaves, said stretching device (1) consisting of a rotating assembly (37) having the shape of a drum driven by a drive shaft (56), said drum cooperating on its periphery with a fixed shell (60) delimiting between the drum and the said shell (60) a partly annular space (61) extending over half the circumference of the rotating assembly (37), characterised in that the body of the drum constituting the rotating assembly (37) is formed by two series of coaxial disks (40, 40₁, 40₂ ..., 41, 41₁, 41₂ ...) driven in rotation by the drive shaft (56), each series of disks diverging on either side from the longitudinal median plane (42) of the stretching device (1), the said longitudinal median plane (42) being the median plane perpendicular to the drive axis of the rotating assembly (37), the two series (38, 39) of he divergent disks (40, 40₁, 40₂ ..., 41, 41₁, 41₂ ...) being disposed in such a manner that at the inlet (16) of the pre-stretched dough lumps (15) into the annular space (61), the disks of each of the series (40, 40₁, 40₂ ..., 41, 41₁, 41₂ ...) are convergent, whilst at the outlet (29) of the stretched dough lumps (28) from the annular space (61), the diverging disks (40, 40₁, 40₂ ..., 41, 41₁, 41₂ ...) are at their maximum spacing relative to each other.

2. A device according to Claim 1, characterised in that it comprises at its inlet (16) wheels (47, 48) pivoting about an axle (49, 50) perpendicular to the drive shaft (56) of the rotating assembly (37), these axles being held in bearings (51, 52) fast with a frame (53), said wheels (47, 48) holding convergent the different disks (40, 41) against each other at the level of said inlet (16).

3. A device according to Claim1, characterised in that it comprises teats (54, 54₁, 54₂ ...) each projecting between two consecutive disks and defining the divergence between the disks (40, 40₁, 40₂ ..., 41, 41₁, 41₂ ...), these teats (54, 54₁, 54₂), being fast with a cross-member (55) attached to he frame (53), having an identical diameter for an equal positive stretching of each dough portion (92, 93) seized between two consecutive disks and a larger diameter in proximity of the median plane (42) than at the extremities of the cross-member (55) to effect the stretching of dough lumps having a greater thickness at the centre.

4. A device according to Claim 1, characterised in that the drive shaft (56), held in bearings (57, 58) fast with the frame (53) is actuated by a motor unit either directly coupled to the drive shaft (56) or indirectly coupled thereto by means of an appropriate transmission (59), comprises for each disk (40, 41, ...) an articulated CARDAN drive (68), each articulated CARDAN drive (68) having a sleeve (84) keyed to the drive shaft (56) and provided with two diametrally opposite protruding pivot pins (81, 82) cooperating with the recesses (77, 78) of an intermediate ring (76), comprising two protruding pivot pins (73, 74) which are located diametrally opposite to each other but the axis (80) of which is perpendicular to the axis (79) of the recesses (77, 78) having a bore (69) in which are formed two lodgings (71, 72) into which engage the pivot pins (73, 74) of the intermediate ring (76) whilst each sleeve (84) is a sleeve longitudinally positioned and keyed on the drive shaft (56) in such a manner, that its center (90) constitutes the point determining the divergence of the corresponding disk (40, 41).

5. A device according to Claim 1, characterised in that it comprises upstream of the rotating assembly (37) a feeder unit (6) composed of a conveyor (7) formed by a driving roller (9), a driven roller (10) and an endless mat (11), and of a fixed wall (8) against which the endless mat (11) rolls the pre-stretched dough lumps (13) coming from the outlet (12) of the former-stretcher (2) and conveys them to the inlet (16), the feeder unit comprising between the endless mat (11) and the fixed wall (8) a space (66) which can be varied as a function of the weight and the diameter of the pre-stretched dough lumps (15).

6. A device according to Claim 1, characterised in that it comprises, downstream of the rotating assembly (37), a disengaging assembly (22) composed of a conveyor (23) and a fixed wall (24) placing the stretched dough lumps (28) on a conveyor (32) to carry them towards the final fermentation chamber, this disengaging assembly (22) comprising between the endless mat (25) and the fixed wall (24) a variable space (67).

7. A device according to Claim 1, characterised in that it comprises an annular space (61) which can be varied as a function of the weight and the diameter of the pre-stretched dough lumps (15).

# FIG.1

# FIG.2

# FIG.3

"2/2"

0165888

FIG.4

FIG.5

FIG.6

FIG.7